(19) **Europäisches Patentamt / European Patent Office / Office européen des brevets**

(11) **EP 3 974 104 B1**

(12) # FASCICULE DE BREVET EUROPEEN

(45) Date de publication et mention de la délivrance du brevet:
**29.05.2024 Bulletin 2024/22**

(21) Numéro de dépôt: **21188642.9**

(22) Date de dépôt: **30.07.2021**

(51) Classification Internationale des Brevets (IPC):
**B23Q 17/00** *(2006.01)*    **G05B 11/32** *(2006.01)*
**G05B 19/18** *(2006.01)*    **G05B 19/408** *(2006.01)*

(52) Classification Coopérative des Brevets (CPC):
**G05B 19/18**

(54) **SYSTÈME DE CONTRÔLE D'USINAGE D'UNE PIÈCE**

SYSTEM ZUR BEARBEITUNGSKONTROLLE EINES WERKSTÜCKS

SYSTEM FOR CONTROLLING MACHINING OF A PART

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.09.2020 FR 2009937**

(43) Date de publication de la demande:
**30.03.2022 Bulletin 2022/13**

(73) Titulaires:
- **AIRBUS OPERATIONS (S.A.S.)**
  **31060 Toulouse (FR)**
- **Airbus (S.A.S.)**
  **31700 Blagnac (FR)**

(72) Inventeurs:
- **NOIROT-NERIN, Emeric**
  **31700 BLAGNAC (FR)**
- **HAMM, Ivan**
  **31060 TOULOUSE Cedex 9 (FR)**
- **POULACHON, Gérard**
  **71250 CLUNY (FR)**
- **ROSSI, Frédéric**
  **71250 CLUNY (FR)**

(74) Mandataire: **Jardel, Marc Henry Philippe**
**Airbus Operations S.A.S.**
**ETRT**
**316, route de Bayonne**
**31060 Toulouse Cedex 09 (FR)**

(56) Documents cités:
**EP-A1- 1 522 384       WO-A1-2015/079164**
**WO-A2-2019/145515    US-A1- 2008 161 959**

**Description**

**Domaine technique**

La présente invention se rapporte au domaine de l'usinage d'une pièce et en particulier, le contrôle de l'usinage d'une pièce avionique.

**Etat de la technique antérieure**

Les industriels et en particulier, les avionneurs, en tant que fournisseur d'un produit répondant à des critères très stricts de sécurité, sont aussi garants de la qualité et durée en service des pièces fabriquées. Des normes intrinsèques aux procédés de fabrication sont ainsi développées par les avionneurs et doivent être appliquées chez l'ensemble de leur chaîne de fournisseurs.

Une attention toute particulière concernant l'impact des procédés de fabrication et plus particulièrement de l'usinage vis-à-vis de l'intégrité matière de la pièce a été apportée par les autorités aéronautiques. L'intégrité de surface des matériaux usinés est devenu un axe majeur d'études afin d'améliorer la durée de vie des pièces usinées et présente ainsi un intérêt particulier à l'industriel qui a pour mandat d'assurer la qualité des pièces qu'il fournit. Il est en effet connu que la résistance mécanique en fatigue des pièces métalliques en dépend.

En 1998, la FAA (Fédéral Aviation Administration) a lancé le projet RoM (Rotor Manufacturing), composé des mêmes partenaires que le projet RISC (Rotor Integrity Sub-Committee). L'objectif de ce groupe de motoristes est d'émettre des recommandations sur les meilleures pratiques de fabrication à appliquer afin qu'elles deviennent obligatoires. Ces exigences conduisent chaque motoriste à définir la sensibilité des pièces en fonction des opérations d'usinage en termes de tolérance aux dommages et de mettre en place des spécifications internes de fabrication à suivre afin de garantir leur conformité.

En 2001, le projet ManHIRP (Integrating process controls with Manufacturing to produce High Integrity Rotating Parts for modem gas turbines) a regroupé l'ensemble des motoristes européens. L'objectif de ce programme a été de caractériser métallurgiquement les défauts d'usinage, d'étudier leur détectabilité pendant et après l'usinage et d'évaluer leur effet de fatigue afin de mesurer leur sévérité. L'aboutissement de cette étude a été d'obtenir les anomalies les plus préjudiciables sur la tenue en fatigue de matériaux dont les défauts ont été le plus souvent simulés.

En 2008, et à la suite du projet ManHIRP, un nouveau projet a découlé des résultats de cette étude : le projet ACCENT, dont l'objectif premier était de montrer l'utilité d'utiliser des moyens de surveillance lors de l'usinage afin de sécuriser l'opération vis-à-vis de l'intégrité matière. Ces moyens de surveillance pourraient être utilisés comme contrôles non destructifs (CND) permettant de détecter, quantifier voire anticiper les endommagements de la matière lors de l'usinage. En exploitant les résultats du projet ManHIRP exprimant la sévérité des anomalies par rapport à la durée de vie d'une pièce en fonctionnement, l'utilisation de moyens de surveillance en tant que moyen CND devraient garantir les propriétés des pièces critiques et leur durabilité. Ainsi, il serait possible de concevoir au plus juste les formes et les dimensions des pièces. Le second objectif de l'utilisation des moyens de surveillance est d'être capable d'adapter le procédé d'usinage aux variations du processus de fabrication (conditions de coupe, usure de l'outil,...) en validant des domaines d'utilisation et non plus en se concentrant sur une procédure figée. Les bénéfices attendus seraient importants et concernent la réduction du temps d'usinage, l'optimisation de la durée de vie des outils et l'élimination des coûts de revalidation liés aux changements mineurs du processus de fabrication.

En 2018, Airbus a lancé le projet HOMDA (HOlistic Machining Digital Approach), définissant les moyens de surveillance et d'automatisation permettant d'augmenter la productivité de l'usinage tout en garantissant l'intégrité matière de la pièce.

En effet, afin de prédire l'intégrité de surface des matériaux usinés, il est important d'estimer les efforts de coupe. Aussi, ces informations peuvent être collectées au travers de quantités appelées "Coefficients spécifiques de coupe". Les valeurs des coefficients spécifiques de coupe varient en fonction des paramètres cinématiques d'usinage (vitesse de coupe, avance et engagement d'outil, etc.), de la nature du matériau usiné (alliage de titane, d'aluminium, alliage ferreux, etc.), de la nature du matériau usinant (nuance de carbure, ARS, Céramique, etc.) et de la géométrie de l'arête de coupe (angle de coupe, angle de dépouille, rayon de raccordement, angle d'hélice, etc).

La détermination de ces coefficients est traditionnellement effectuée par des essais "Couple Outil Matière" (Norme NF E 66-520) et par des essais Couple Arête Matière (Essais de coupe orthogonale ou oblique). Cependant, ils requièrent une instrumentation onéreuse (dynamomètre d'efforts, wattmètre à la broche ou au variateur) et l'utilisation de machines dédiées dites *Machines-Outils à Commandes Numériques* MOCN (ou banc de rabotage). De plus, ces essais doivent être réalisés pour chaque nouveau couple de matériaux usinants/usinés.

On notera que les Machines-Outils à Commandes Numériques (MOCN) sont relativement pauvres en termes d'information sur le processus de coupe. En phase d'usinage, les MOCN sont très performantes dans le suivi des trajectoires d'outil qui ont été programmées, mais elles manquent d'informations quant au déroulement de la coupe.

Par conséquent, sans instrumentation, elles ne peuvent pas élever leur niveau «d'intelligence » et détecter d'elles-mêmes des défaillances comme un endommagement de l'outil ou de la broche, une usure excessive, des vibrations, une collision, l'absence de la pièce ou de l'outil, etc. Il est donc nécessaire d'instrumenter les MOCN afin d'acquérir des informations et signaux d'effort sur le déroulement de l'usinage.

Les signaux d'effort contiennent de nombreuses informations, notamment quant à l'état de l'outil et son niveau d'usure. Mais il est également possible, pour un chargement thermomécanique identifié qui serait appliqué à la surface usiné, d'en déduire la relation de cause à effet entre l'intégrité de surface et les paramètres opératoires. Les signaux d'efforts deviennent alors un indice de la qualité de la surface usinée. La puissance d'usinage, dépendant des efforts de coupe, contient l'information de l'intégrité du couple de matériaux usinés et usinants.

En fraisage, la puissance consommée par la broche est souvent utilisée (ex.:systèmes Artis ou DigitalWay). La puissance consommée n'a pas totalement la sensibilité suffisante pour détecter un endommagement de l'outil. Les mesures d'efforts (effort de poussée et couple outil), de vibrations ou d'émissions acoustiques sont donc privilégiées. Certains proposent toute une gamme de capteurs pouvant être utilisée suivant les besoins des applications, et en combinant plusieurs mesures.

Les tables dynamométriques sont très largement utilisées pour la mesure des efforts de coupe et sont l'outil de prédilection pour effectuer un travail de recherche expérimental. En effet, leurs grandes précisions, sensibilités et bandes-passantes permettent d'établir des relations entre les efforts de coupe et les paramètres opératoires, ainsi que de valider des stratégies de surveillance d'usinage. Néanmoins, leur coût est élevé et elles peuvent être endommagées en cas de choc. Leurs dimensions limitent considérablement l'espace de travail (usinage de pièces de petite taille) et des portes-pièces spécifiques doivent être réalisés. Pour toutes ces raisons, les tables dynamométriques ne peuvent pas être utilisées industriellement, en production.

Par ailleurs, il existe des méthodes pour qualifier des paramètres opératoires permettant de sécuriser la santé matière des pièces critiques usinées et de garantir leur durée de vie en termes de fatigue. La qualification de la fenêtre de paramètres opératoires peut être réalisée en corrélant directement les paramètres cinématiques avec le nombre de cycle à rupture du matériau usiné. Il s'agit donc d'usiner, dans les conditions opératoires soumises à qualification, un échantillon statistique de plusieurs éprouvettes de fatigue (Norme EN 6072) en faisant varier les conditions cinématiques opératoires, puis de tester la durée de vie des échantillons (Bending test). Les conditions opératoires pour lesquelles les échantillons répondent favorablement aux critères de durée de vie en termes de fatigue sont par la suite qualifiées.

Bien que la démarche de corrélation directe entres les conditions opératoires et la durée de vie en termes de fatigue soit particulièrement efficace pour qualifier rapidement des conditions cinématiques d'un outil à géométrie fixée, elle devient particulièrement limitée dans le contexte du développement actuel du marché des outils coupants (nouvelles géométries, revêtement, nuance de carbure, voire de nouveaux matériaux tels que les céramiques ou outils diamants), des nouvelles technologies d'assistance d'usinage (lubrifications hautes pressions, cryogénie, assistance vibratoire, laser, etc.), des nouvelles machines à grandes vitesses (Nouvelles plages de vitesses UGV, technologie d'attache outil, capteurs intégrés, etc.).

L'objet de la présente invention est par conséquent, de proposer un système (et un procédé) prenant en compte les aspects thermomécaniques des matériaux pour déterminer de manière simple et rapide les conditions de coupe optimales et pour automatiquement contrôler l'usinage afin de préserver l'intégrité de la pièce usinée.

Un procédé de détermination de l'usure d'une face de dépouille d'un outil de coupe, dans lequel ladite usure est déterminée au moyen d'une fonction générale calculant une longueur caractéristique de ladite usure en fonction d'au moins une variable dépendant du temps est décrit dans le document WO 2015/079164.

Le document EP 1 522 384 concerne un dispositif de surveillance de l'usinage d'une pièce effectué par l'outil d'une machine, doté d'au moins une arête de coupe comprenant une table dynamométrique et un ordinateur programmé pour calculer, à partir de paramètres relatifs à l'usinage, les forces de frottement et de cisaillement subies par l'outil, les vitesses de frottement et de cisaillement, ainsi que les puissances de frottement et de cisaillement dissipées

**Présentation de l'invention**

La présente invention concerne un système de contrôle lors de l'usinage d'une pièce par une machine à usinage selon la revendication 1

Avantageusement, ledit module d'acquisition est configuré pour acquérir lors de l'usinage de la pièce au moins un signal de coupe, et ledit microprocesseur est configuré pour contrôler le déroulement des opérations de coupe en s'assurant que la valeur dudit signal de coupe soit bornée par ledit seuil de fatigue.

Ceci permet de surveiller en temps réel l'usinage de la pièce et permet également d'optimiser la durée de vie des outils et d'éliminer les coûts de revalidation liés à des changements du processus de fabrication.

Avantageusement, ledit au moins un paramètre opératoire de coupe est un paramètre de couple C représentatif d'un signal de couple issu de la machine d'usinage ou un paramètre de puissance représentatif d'un signal de puissance issu de la machine d'usinage, et ledit au moins un seuil de fatigue est un seuil de couple ou un seuil de puissance.

Les signaux de couple et de puissance sont très faciles à mesurer permettant ainsi de garantir de manière simple, rapide et à faible coût l'intégrité de la pièce usinée sachant qu'en général les machines à usinage comportent déjà des capteurs de mesure de puissance et de couple.

Selon un mode de réalisation de la présente invention, le module d'acquisition est configuré pour acquérir lors d'une phase d'apprentissage des valeurs de paramètres d'entrée comprenant :

- des paramètres cinématiques macroscopiques comportant un paramètre de vitesse de coupe $v_c$, un paramètre d'avance à la dent $f_z$, un paramètre d'engagement axial de l'outil $a_p$, et un paramètre d'engagement radial de l'outil $a_e$;
- des paramètres de la géométrie de l'outil comportant un angle de coupe $\gamma_n$, et un angle d'hélice $\lambda_s$;
- des paramètres de tribologie comportant un angle de frottement moyen $\beta_a$; et
- des paramètres du matériau comportant une capacité thermique massique $c_{cp}$, une masse volumique $\rho$ et un coefficient de Taylor-Quinney $\chi$; et

  - le microprocesseur est configuré pour construire le modèle d'intégrité en utilisant des relations physiques analytiques et/ou empiriques reliant ledit ensemble de paramètres d'entrée audit ensemble de paramètres de sortie représentatifs des contraintes de coupe.

Le modèle d'intégrité permet de corréler des propriétés d'intégrité de surface avec les paramètres opératoires et outils coupants. Ceci permet d'encadrer des paramètres de conditions de coupes et de simuler le chargement de tels paramètres sur la surface de la pièce usinée. Ainsi, à partir des paramètres opératoires et des paramètres d'outil coupant, le modèle est capable de prédire comment ces paramètres vont charger thermo-mécaniquement la matière. En particulier, les paramètres de chargement mécanique renseignent sur les interactions entre l'outil et la pièce, et donc sur le déroulement de l'usinage, sur le comportement vibratoire, sur l'état de l'outil, celui de la broche et sur la santé matière ou intégrité de surface de la pièce usinée.

Avantageusement, le microprocesseur est configuré pour :

- calculer en utilisant des relations géométriques et empiriques les valeurs d'angles caractéristiques de la coupe oblique comportant un angle de cisaillement oblique $\phi_i$, un angle de cisaillement normal $\phi_n$, un angle de projection normal $\vartheta_n$, un angle de projection oblique $\vartheta_i$ et un angle d'écoulement de copeau $\eta$, en fonction des valeurs d'un angle de frottement moyen $\beta_a$, d'un angle de coupe $\gamma_n$, et d'un angle d'hélice (obliquité d'arête) $\lambda_s$, et
- calculer en utilisant des relations analytiques et empiriques les valeurs des paramètres de la coupe orthogonale comportant les valeurs d'épaisseur de la bande de cisaillement $h_s$ et un facteur d'asymétrie $k_s$ en utilisant les valeurs de la vitesse de coupe $v_c$, l'angle de cisaillement normal $\phi_n$ et l'angle de coupe $\gamma_n$.

Avantageusement, le microprocesseur est en outre configuré pour :

- déterminer les valeurs de déformation de cisaillement $\gamma_s$ et de taux de déformation $d\gamma_s/dt$ dans la bande de cisaillement primaire en fonction des valeurs d'épaisseur de la bande de cisaillement $h_s$ et du facteur d'asymétrie $k_s$ et
- utiliser une loi de comportement du matériau et lesdites valeurs de déformation de cisaillement $\gamma_s$ et de taux de déformation $d\gamma_s/dt$ ainsi que les valeurs de paramètres du matériau pour déterminer une contrainte de cisaillement $\tau_s$ dans la bande de cisaillement primaire.

Avantageusement, le microprocesseur est aussi configuré pour calculer les coefficients spécifiques de coupe comportant un coefficient d'effort tangentiel d'arête $K_{tc}$, un coefficient d'effort radial d'arête $K_{rc}$, et un coefficient d'effort axial d'arête $K_{ac}$, en fonction de la contrainte de cisaillement $\tau_s$ et l'angle de cisaillement oblique $\phi_i$, l'angle de cisaillement normal $\phi_n$, l'angle de projection normal $\vartheta_n$, l'angle de projection oblique $\vartheta_i$ et l'angle d'hélice $\lambda_s$.

Les coefficients spécifiques de coupe représentent les efforts et températures de coupe qui permettent de prédire l'intégrité de surface des matériaux usinés.

Avantageusement, le microprocesseur est également configuré pour :

- calculer des efforts instantanés d'usinage comportant un effort tangentiel d'arête $F_t$, un effort radial d'arête $F_r$, et un effort axial d'arête $F_a$, en fonction des coefficients spécifiques de coupe (coefficient d'effort tangentiel d'arête $K_{te}$, un coefficient d'effort radial d'arête $K_{re}$, un coefficient d'effort axial d'arête $K_{ae}$), une largeur de dent en prise $b_{\lambda s}$ et l'épaisseur de copeau $h$,
- calculer le paramètre de couple $C$ à la broche et le paramètre de puissance $P$ à la broche en fonction de l'effort tangentiel d'arête $F_t$, la vitesse de coupe $v_c$ et le diamètre de l'outil $D$, et
- établir un seuil de couple et un seuil de puissance en fonction des paramètres de couple $C$ et de puissance $P$.

La présente invention vise également une machine d'usinage à commande numérique comportant le système de contrôle selon l'une quelconque des caractéristiques précédentes.

La présente invention concerne aussi un procédé de contrôle lors de l'usinage d'une pièce par une machine à usinage, comportant les étapes suivantes :

- acquérir des valeurs d'un ensemble de paramètres d'entrée relatifs à des conditions de coupes et des propriétés du matériau de ladite pièce, et
- déterminer au moins un paramètre opératoire de coupe représentatif d'un signal de coupe issu de la machine d'usinage en utilisant un ensemble de paramètres de sortie d'un modèle d'intégrité construit préalablement lors d'une phase d'apprentissage, ledit modèle d'intégrité reliant ledit ensemble de paramètres d'entrée audit ensemble de paramètres de sortie comprenant des coefficients spécifiques de coupe représentatifs de l'intégrité de matière de la pièce, et
- établir au moins un seuil de fatigue dudit au moins un paramètre opératoire de coupe, ledit seuil de fatigue permettant le contrôle du déroulement des opérations de coupe.

## Brève description des figures

D'autres particularités et avantages du dispositif et du procédé selon l'invention ressortiront mieux à la lecture de la description faite ci-après, à titre indicatif mais non limitatif, en référence aux dessins annexés sur lesquels :

[Fig. 1] illustre de manière schématique un système de contrôle d'usinage d'une pièce, selon un mode de réalisation de l'invention ; et
[Fig. 2] est un schéma en bloc illustrant la construction d'un modèle d'intégrité, selon un mode de réalisation de l'invention.

## Description des modes de réalisation

Le principe de l'invention consiste à contrôler le déroulement des opérations de coupe d'une pièce selon des paramètres représentatifs de l'intégrité de matière de la pièce usinée déterminés en fonction des aspects thermomécaniques de la pièce.

On notera que l'usinage est un procédé de fabrication par enlèvement de matière. Par conséquent, des efforts énergétiques via des actions mécaniques sont nécessaires pour déformer plastiquement, séparer et enlever la matière de la pièce usinée. Ainsi, la présente invention propose d'analyser ces actions mécaniques pour déterminer les interactions entre l'outil et la pièce usinée pour ensuite contrôler et surveiller l'intégrité de matière de toute pièce lors de son usinage.

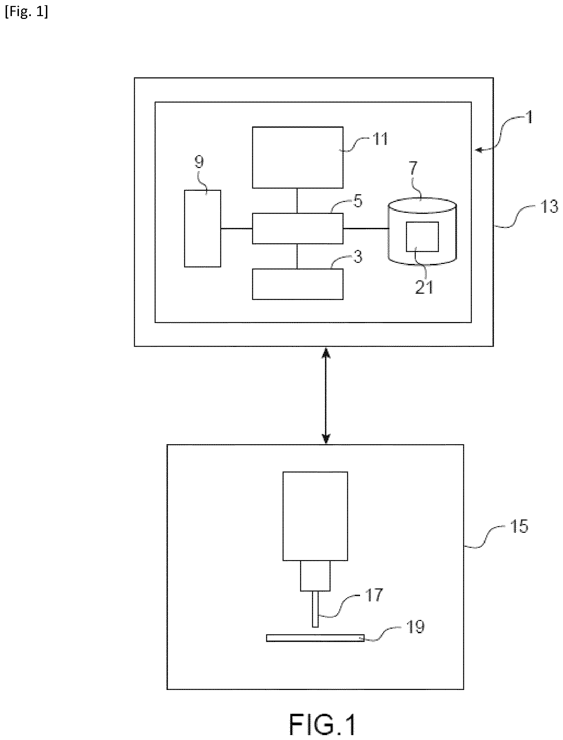

La Fig. 1 illustre de manière schématique un système de contrôle d'usinage d'une pièce, selon un mode de réalisation de l'invention.

Conformément à l'invention, le système de contrôle 1 comporte un module d'acquisition 3, un microprocesseur 5, une unité de stockage 7, une interface d'entrée 9 (par exemple, un clavier) et une interface de sortie 11 (par exemple un écran). Avantageusement tous ces éléments matériels du système de contrôle 1 sont déjà intégrés dans un dispositif de commande 13 d'une machine d'usinage 15 à commande numérique. La machine d'usinage 15 est en général équipée d'un magasin dans lequel sont disposés différents outils coupants 17 (aléseuses-perceuses, fraiseuses, etc.) permettant d'usiner des formes programmées sur la pièce 19 d'intérêt.

Le module d'acquisition 3 est configuré pour acquérir des données correspondant à un ensemble de paramètres d'entrée relatifs à des conditions de coupes et des propriétés du matériau de la pièce 19 à usiner. Ces paramètres d'entrée concernent des variables cinématiques, géométriques, tribologiques ou physiques relatives à la pièce à usiner et à l'outil d'usinage.

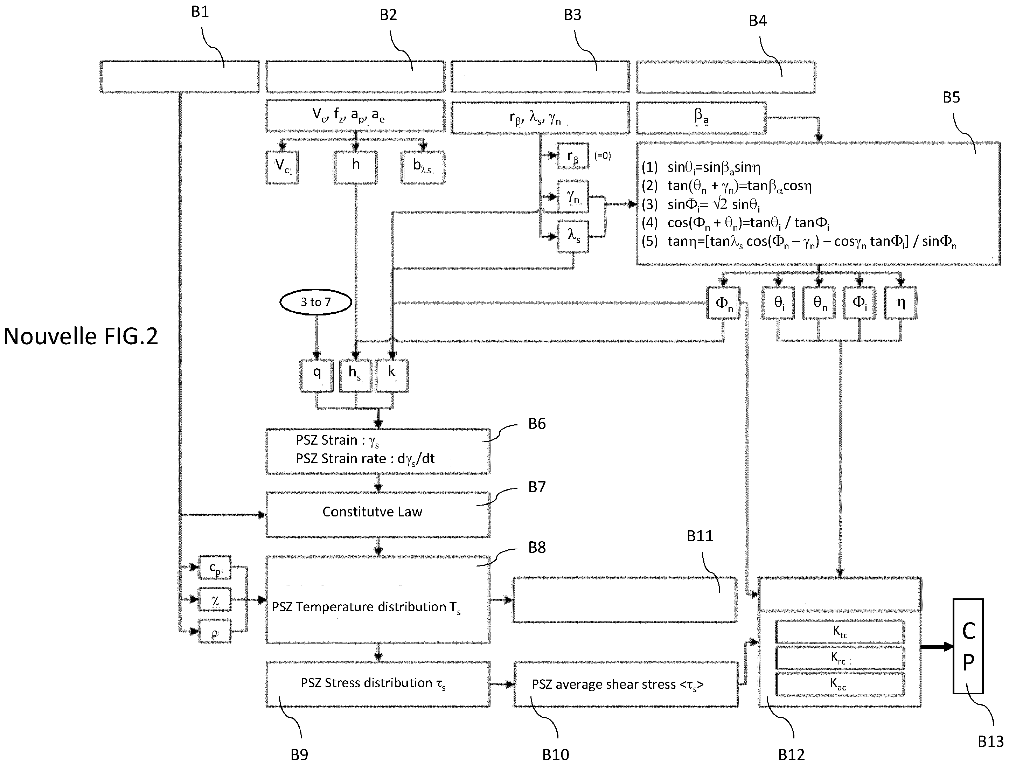

Le microprocesseur 5 est configuré pour déterminer au moins un paramètre opératoire de coupe représentatif d'un signal de coupe issu de la machine d'usinage 15 en utilisant un ensemble de paramètres de sortie d'un modèle d'intégrité 21 construit préalablement lors d'une phase d'apprentissage et stocké dans l'unité de stockage 7. Ce modèle d'intégrité 21 est construit de manière à relier l'ensemble de paramètres d'entrée à l'ensemble de paramètres de sortie qui comprennent des coefficients spécifiques de coupe représentatifs de l'intégrité de matière de la pièce usinée (voir Fig. 2).

En outre, le microprocesseur 5 est configuré pour établir un seuil de fatigue relatif à chaque paramètre opératoire de coupe. Chaque seuil de fatigue correspond à une fenêtre de conditions de coupe permettant le contrôle du déroulement des opérations de coupe sachant que le paramètre opératoire de coupe correspondant présente une influence sur le comportement mécanique de la pièce 19 usinée. Ainsi, le contrôle des opérations via la fenêtre de conditions de coupe garantie l'intégrité de matière de la pièce 19.

En effet, le module d'acquisition 3 est configuré pour acquérir au moins un signal de coupe lors d'un mode opératoire de l'usinage de la pièce.

A titre d'exemple, le paramètre opératoire de coupe peut avantageusement être un paramètre de couple C représentatif d'un signal de couple issu de la broche de la machine d'usinage 15 ou un paramètre de puissance représentatif d'un signal de puissance issu également de la machine d'usinage 15. Dans ces cas, le seuil de fatigue correspondant est un seuil de couple ou un seuil de puissance. En général, les machines à usinage 15 comportent déjà des capteurs de mesure de puissance et de couple. Ces valeurs dépendent du matériau usiné.

A titre d'exemple, afin de maintenir les critères de sécurité et d'intégrité pour le titane TA6V, le seuil de puissance est d'environ 1600 W et le seuil de couple est d'environ 60 Nm.

En outre, le microprocesseur 5 est configuré pour contrôler et surveiller en temps réel le déroulement des opérations de coupe en comparant la valeur du seuil de fatigue correspondant au signal de coupe et en s'assurant que la valeur du signal de coupe soit toujours bornée par le seuil de fatigue. Ainsi, l'intégrité de matière de la pièce 19 usinée est assurée tant que le signal de coupe ne dépasse pas le seuil de fatigue correspondant. Par exemple, pour le titane TA6V, la puissance est contrôlée par le microprocesseur pour rester comprise entre 80 W et 1600 W et de même, le couple est contrôlé pour rester compris entre 8 Nm et 60.

On notera que le paramètre opératoire de coupe peut aussi être l'intensité électrique consommée par la machine à usinage 15 sachant que cette dernière comporte également un capteur de mesure de courant. Par ailleurs, le paramètre opératoire de coupe peut être la vibration de la broche de la machine à usinage 15 ou un tout autre paramètre.

La Fig. 2 est un schéma en bloc illustrant la construction d'un modèle d'intégrité, selon un mode de réalisation de l'invention.

La construction du modèle d'intégrité est réalisée lors d'une phase d'apprentissage. A titre d'exemple, le modèle d'intégrité est construit selon les propriétés ou contraintes suivantes :

- L'outil de coupe est supposé rigide avec un rayon d'acuité d'arête $r_\beta$ égal à zéro ; · Le copeau formé est continu ;
- L'épaisseur coupée est faible devant la largeur de coupe b, ce qui justifie un usinage en déformation plane ;
- Le champ cinématique ne dépend que des coordonnées de cisaillement $x_\Phi$, ce qui peut être justifié par la faible sensibilité à la température dans les conditions industriellement viables ;
- Le matériau est supposé homogène, isotrope et suit une loi de comportement viscoplastique ;
- L'épaisseur de la bande de cisaillement est supposée constante. Le plan de cisaillement (AB) divise la bande de cisaillement $h_s$ en deux zones. Une zone d'entrée relativement large dont l'épaisseur est définie par la relation $k \times h_s$ (où $0 < k < 1$), et une zone de sortie relativement fine dont l'épaisseur est définie par la relation $(1 - k) \times h_s$.

Aux blocs B1-B4, le module d'acquisition est configuré pour acquérir des valeurs de paramètres d'entrée comprenant les valeurs de paramètres cinématiques macroscopiques, de paramètres de la géométrie de l'outil, de paramètres de la géométrie de l'arête de coupe, de paramètres de tribologie (i.e. frottement), et de paramètres du matériau. Les valeurs de paramètres d'entrée peuvent être enregistrées dans l'unité de stockage.

Au bloc B1 les paramètres du matériau comportent une capacité thermique massique $c_{cp}$, une masse volumique $\rho$ et un coefficient de Taylor-Quinney $\chi$.

Au bloc B2, les paramètres cinématiques macroscopiques comportent un paramètre de vitesse de coupe $v_c$, un paramètre d'avance à la dent $f_z$, un paramètre d'engagement axial de l'outil $a_p$, et un paramètre d'engagement radial de l'outil $a_e$.

Au bloc B3, les paramètres de la géométrie de l'outil comportent un angle de coupe $\gamma_n$, et un angle d'hélice (i.e. obliquité d'arête) $\lambda_s$.

Finalement, au bloc B4, les paramètres de tribologie comportent un angle de frottement moyen $\beta_a$.

Aux blocs B5-B12 le microprocesseur 5 est configuré pour construire le modèle d'intégrité 21 en utilisant des relations physiques analytiques et/ou empiriques reliant l'ensemble de paramètres d'entrée à l'ensemble de paramètres de sortie. Ce dernier comprend des coefficients spécifiques de coupe représentatifs des contraintes de coupe.

Plus particulièrement, au bloc B5, le microprocesseur 5 est configuré pour calculer en utilisant des relations géométriques et/ou empiriques les valeurs d'angles caractéristiques de la coupe oblique comportant un angle de cisaillement oblique $\phi_i$, un angle de cisaillement normal $\phi_n$, un angle de projection normal $\vartheta_n$, un angle de projection oblique $\vartheta_i$ et un angle d'écoulement de copeau $\eta$. Ces valeurs d'angles caractéristiques de la coupe oblique sont calculées en fonction des valeurs correspondant à l'angle de frottement moyen $\beta_a$, l'angle de coupe $\gamma_n$, et l'angle d'hélice $\lambda_s$. On notera que les valeurs d'angles caractéristiques de la coupe oblique permettent de prédire les efforts et températures pendant la coupe oblique.

Les relations géométriques de la coupe oblique sont définies par le système d'équations suivantes :
[Math. 1]

$$sin \, \vartheta_i = sin \, \beta_a \, sin \, \eta \qquad (1)$$

[Math. 2]

$$tan \, (\vartheta_n + \gamma_n \,) = tan \, \beta_a \, cos \, \eta \quad (2)$$

[Math. 3]

$$tan \, \eta = [1/ \, sin \, \phi_n \,][tan \, \lambda s \, cos \, (\phi_n - \gamma_n \,) - cos \, \gamma_n \, tan \, \phi_i] \quad (3)$$

Afin de résoudre ce système de trois équations à cinq inconnus, deux équations supplémentaires sont nécessaires. On peut utiliser la méthode de résolution suivant le principe de maximisation de la contrainte de cisaillement. Le système d'équations peut être résolu par itération numérique en imposant une condition initiale de Stabler (décrite dans « the fundemental geometry of cutting tools » Stabler, Proceedings of the institution of mechanical engineers 1951) selon laquelle l'angle d'écoulement de copeau $\eta$ est égal à l'angle d'hélice $\lambda_s$ : (i.e. $\eta = \lambda_s$).

Les angles de coupe $\gamma_n$, et d'hélice $\lambda_s$ sont connus grâce aux aspects cinématiques et géométriques de la dent. Par ailleurs, l'angle de frottement moyen $\beta = \beta_a$ sur la face de coupe peut être déterminé à partir d'essais de rabotage ou d'essais de tribologie.

On notera que l'angle de frottement peut également être déterminé de manière empirique. En effet, l'angle de frottement dépend de la vitesse relative de l'écoulement du copeau sur la face de coupe, de la pression du copeau sur la face de coupe et des caractéristiques tribologiques de la face de coupe (surface polie, revêtement, etc). Il est connu une relation empirique entre l'angle de frottement et l'angle de coupe $\gamma_n$, donnée par l'équation suivante:

[Math. 4]

$$\beta_a = 19.1 + 0.29 \, \gamma_n \quad (4)$$

Cette relation est déduite de façon empirique pour le couple Ti-6Al-4V et Outil carbure WC et pour des angles de coupes compris entre 0° et 12°.

Ainsi, à la sortie du bloc B5, on a les valeurs des angles de cisaillement oblique $\phi_i$, de cisaillement normal $\phi_n$, de projection normal $\vartheta_n$, de projection oblique $\vartheta_i$ et d'écoulement de copeau $\eta$. Ces valeurs peuvent être enregistrées dans l'unité de stockage.

Au bloc B6, le microprocesseur est configuré pour déterminer les valeurs de déformation de cisaillement $\gamma_s$ et de taux de déformation $d\gamma_s/dt$ dans la bande de cisaillement primaire.

Le microprocesseur utilise d'abord les valeurs de la vitesse de coupe $v_c$, l'angle de cisaillement normal $\phi_n$, l'angle de coupe $\gamma_n$ et l'épaisseur de copeau non déformé h pour calculer au moyen des relations analytiques et empiriques les valeurs des paramètres de la coupe orthogonale comportant les valeurs de l'épaisseur de la bande de cisaillement $h_s$ et d'un facteur d'asymétrie $k_s$.

L'épaisseur de la bande de cisaillement $h_s$ peut être calculée en fonction de l'épaisseur de copeau non déformé h (de l'ordre de 25 $\mu$m) et de l'angle de cisaillement normal $\phi_n$, selon la relation empirique suivante :

[Math. 5]

$$h_s = h \, / \, 10 \, sin \, \phi_n \quad (5)$$

En outre, le facteur d'asymétrie $k_s$ peut être calculé en fonction de l'angle de cisaillement normal $\phi_n$ et de l'angle de coupe $\gamma_n$, selon la relation empirique suivante :

[Math. 6]

$$k_s = (sin \, \phi_n \, . sin \, (\phi_n - \gamma_n) \, / \, cos \, \gamma_n \quad (6)$$

Ensuite, le microprocesseur utilise les valeurs d'épaisseur de la bande de cisaillement $h_s$ et du facteur d'asymétrie $k_s$ calculées précédemment pour déterminer un champ de déformation et en particulier, les valeurs de déformation de cisaillement $\gamma_s$ et de taux de déformation $d\gamma_s/dt$ dans la bande de cisaillement primaire.

Le taux de déformation $\dot{\gamma}_s = d\gamma_s/dt$ est défini par les relations suivantes :
[Math. 7]

$$\frac{d\gamma_s}{dt} = \dot{\gamma}_s = \begin{cases} \frac{\dot{\gamma}_m}{[(1-k)h_s]^q} [y_s + (1-k)h_s]^q & y_s \in [-(1-k)h_s; 0] \\ \frac{\dot{\gamma}_m}{[kh_s]^q} [kh_s - y_s]^q & y_s \in [0; kh_s] \end{cases} \quad (7)$$

Le coefficient q dépend de la vitesse de coupe et peut varier entre les valeurs 3 et 7. A titre d'exemple q est égal à 3 pour des faibles vitesses de coupe et peut atteindre 7 pour des vitesses élevées.

En outre, la déformation de cisaillement $\gamma_s$ est définie selon les relations suivantes :
[Math. 8]

$$\gamma_s = \begin{cases} \frac{\dot{\gamma}_m [y_s + (1-k)h_s]^{q+1}}{(q+1)v\sin\varphi[(1-k)h_s]^q} & y_s \in [-(1-k)h_s; 0] \\ \frac{\dot{\gamma}_m [kh_s - y_s]^{q+1}}{(q+1)[kh_s]^q} + v\sin\varphi.\tan(\varphi - \gamma_n) & y_s \in [0; kh_s] \end{cases} \quad (8)$$

Dans les relations ci-dessus, le paramètre $\dot{\gamma}_m$ représente la vitesse de déformation maximale, le paramètre v représente la vitesse de coupe (i.e. $v = v_c$) acquise au bloc B2, le paramètre $\varphi$ est l'angle de cisaillement normal $\phi_n$ déduit au bloc B5 et le paramètre $\gamma_n$ est l'angle de coupe dont la valeur est déjà connue.

Aux blocs B7-B10, le microprocesseur est configuré pour déterminer une contrainte de cisaillement $\tau_s$ dans la bande de cisaillement primaire. Pour cela, le microprocesseur utilise une loi de comportement du matériau (bloc B7) et les valeurs de paramètres du matériau comportant la capacité thermique massique $c_{cp}$, la masse volumique $\rho$ et le coefficient de Taylor-Quinney $\chi$ ainsi que les valeurs de déformation de cisaillement $\gamma_s$ et de taux de déformation $d\gamma_s/dt$.

On notera qu'il est possible d'utiliser n'importe quelle loi de comportement identifiée pour le matériau d'intérêt. A titre d'exemple, on peut utiliser une loi de comportement de type Calamaz et Coupard (décrite dans « Strain field measurement in orthogonal machining of titanium alloy » Calamaz, Coupard, et Girot 2008). Cette loi permet de déterminer la contrainte de cisaillement $\tau_s$ dans la zone de cisaillement primaire en fonction de la déformation de cisaillement $\gamma_s$, du taux de déformation $d\gamma_s/dt$, de l'angle de coupe $\gamma_n$, de la température de fusion du matériau $T_m$, de la température ambiante $T_r$ et de la température dans la bande de cisaillement primaire $T_s$.

Un exemple de loi de comportement définissant la contrainte de cisaillement $\tau_s$ est donné par la formule suivante :
[Math. 9]

$$\tau_s = \frac{1}{\sqrt{3}} \cdot \left[ A + B\left(\frac{\gamma_s}{\sqrt{3}}\right)^n \cdot \left(\frac{1}{\exp\left(\left(\frac{\gamma_s}{\sqrt{3}}\right)^a\right)}\right) \right] \left[1 + C \cdot \ln\left(\frac{\dot{\gamma}_s}{\dot{\gamma}_0}\right)\right] \cdot \left[1 - \left(\frac{T_s - T_r}{T_m - T_r}\right)^m\right]$$

$$\cdot \left[D + (1-D)\left[\tanh\left(\frac{1}{(\gamma + p)^r}\right)\right]^s\right]$$

$$D = 1 - \left(\frac{T}{T_m}\right)^d, p = \left(\frac{T}{T_m}\right)^b \quad (9)$$

Les paramètres A, B, C, n, m, a, b, d, r, et s sont connus et ont déjà été identifiés par différents auteurs avec des essais balistiques pour des vitesses de déformation comprises entre 0.0001s-1 à 2150s-1.

Ces valeurs sont définies dans le Tableau 1 ci-dessous :

[Table. 1]

| paramètre | A | B | n | C | m | a | b | d | r | s |
|-----------|-----|-----|------|-------|-----|-----|---|---|---|------|
| valeur | 862.5 | 331.2 | 0.34 | 0.012 | 0.8 | 0.5 | 5 | 1 | 2 | 0.05 |

Aux blocs B8 et B9, le microprocesseur utilise la loi de comportement ainsi qu'une équation différentielle définissant la température dans la bande de cisaillement primaire $T_s$ en fonction de la contrainte de cisaillement $\tau_s$ pour déterminer le champ de température $T_s$ et la contrainte de cisaillement $\tau_s$ par une intégration numérique.

L'équation différentielle est définie en fonction de la contrainte de cisaillement $\tau_s$, du taux de déformation $\dot{\gamma}$, de la température ambiante $T_r$, du coefficient de Taylor-Quinney $\chi$, de la capacité thermique massique $c_{cp}$, de la masse volumique $\rho$, de la projection $V_n$ de la vitesse de coup $V_c$ suivant l'axe $x_{\phi n}$ du repère $(x_{\phi n}, y_{\phi n})$ de la bande de cisaillement, et de la température $\gamma_s$ dans la bande de cisaillement, de la manière suivante :

[Math. 10]

$$T_s = \begin{cases} T_r + \frac{\chi}{\rho.c_p.V_n} \int_{y=(k-1)h_s}^{y=y_s} \tau_s.\dot{\gamma} \, dy_s \\ T_{s|y_s=0} + \frac{\chi}{\rho.c_p.V_n} \int_{y=0}^{y=y_s} \tau_s.\dot{\gamma} \, dy_s \end{cases} \quad (10)$$

En outre, au bloc B10 le microprocesseur détermine la contrainte de cisaillement moyenne $\overline{\tau_s}$ dans la bande de cisaillement $h_s$ de la manière suivante :

[Math. 11]

$$\overline{\tau_s} = \frac{1}{h_s} \int_{y=0}^{y=h_s} \tau_s \, dy_s \quad (11)$$

On notera que l'évolution de la température dans la bande de cisaillement primaire peut être décrit par l'équation de la chaleur en deux dimensions suivante :

[Math. 12]

$$K\Delta T - \rho c_{cp} [V_x (\partial T_s /\partial x_s) + V_n (\partial T_s /\partial y_s) + Q = 0. \quad (12)$$

Au vu des faibles dimensions de la bande de cisaillement, la conductivité thermique est négligeable et les phénomènes thermiques dans la bande de cisaillement évoluent dans des conditions adiabatiques permettant ainsi d'annuler le terme $K\Delta T$ (i.e. $K\Delta T \approx 0$). En outre, le coefficient de Taylor-Quinney $\chi$ (pris par exemple, égal à 0.9) représente la portion du travail plastique convertie en chaleur selon l'équation suivante :

[Math. 13]

$$\rho c_p V_n = \chi \times \tau_s \times d\gamma/dt \quad (13)$$

Par ailleurs, connaissant la contrainte de cisaillement $\tau_s$ et la déformation de cisaillement $\gamma_s$ dans la bande de cisaillement primaire, ainsi que la conductivité et la diffusivité thermique du matériau usiné, il est possible d'estimer les partitions thermiques entre le copeau et la surface. En effet, au bloc B11 le microprocesseur est également configuré pour calculer la température dans la bande de cisaillement Ts selon la formule suivante :

[Math. 14]

$$T_s = T_0 + R_1 \times (\chi \tau_s \, \gamma_s/\rho c_{cp}) \quad (14)$$

La variable $R_1$ est le coefficient de partage défini en fonction de la diffusivité thermique $k_1$ du matériau, de la vitesse de coupe $v_c$, de l'angle de coupe $\gamma_n$, et de l'épaisseur de copeau non déformé h, selon la formule suivante :

[Math. 15]

$$R_1 = 1/\left(1 + 1{,}328\sqrt{k_1 \gamma/v_c h}\right) \quad (15)$$

On notera qu'un copeau épais (h>0.1mm) permet d'évacuer efficacement les calories générées pendant la formation du copeau et permet d'abaisser la température sur la surface usinée. En outre, l'augmentation de la vitesse de coupe permet de générer une coupe adiabatique et d'abaisser la température sur la surface usinée.

Au bloc B12, le microprocesseur est configuré pour calculer les coefficients spécifiques de coupe comportant un coefficient d'effort tangentiel d'arête $K_{tc}$, un coefficient d'effort radial d'arête $K_{rc}$, et un coefficient d'effort axial d'arête $K_{ac}$, en fonction de la contrainte de cisaillement $\tau_s$, l'angle de cisaillement oblique $\phi_i$, l'angle de cisaillement normal $\phi_n$, l'angle de projection normal $\vartheta_n$, l'angle de projection oblique $\vartheta_i$ et l'angle d'hélice $\lambda_s$. Les coefficients spécifiques de coupe sont définis par les équations suivantes :

[Math. 16]

$$K_{tc} = \overline{\tau_s}\,(\cos\theta_n + \tan\theta_i \tan\lambda_s)/[\cos(\theta_n + \phi_n)\cos\phi_i + \tan\theta_i \sin\phi_i]\sin\phi_n \quad (16)$$

[Math. 17]

$$K_{rc} = \overline{\tau_s}\,\sin\theta_n/[\cos(\theta_n + \phi_n)\cos\phi_i + \tan\theta_i \sin\phi_i]\cos\lambda_s \sin\phi_n \quad (17)$$

[Math. 18]

$$K_{ac} = \overline{\tau_s}\,(\tan\theta_i - \cos\theta_n \tan\lambda_s)/[\cos(\theta_n + \phi_n)\cos\phi_i + \tan\theta_i \sin\phi_i]\sin\phi_n \quad (18)$$

Les valeurs de ces coefficients spécifiques permettent de prédire le chargement thermomécanique lors de l'usinage d'une pièce.

En effet, le microprocesseur est configuré pour encadrer des paramètres de coupe pour que les valeurs des coefficients spécifiques soient comprises dans un intervalle garantissant l'intégrité de la pièce usinée.

Avantageusement, les paramètres de coupe sont des paramètres opératoires de coupe facilement mesurables lors de l'usinage tel que la puissance P ou le couple C à la broche de la machine d'usinage ou l'intensité électrique circulant dans la machine à usinage.

Ainsi, le microprocesseur utilise le modèle d'intégrité pour encadrer les paramètres de coupe afin que les valeurs des coefficients spécifiques de sortie soient représentatives d'une intégrité de matière optimale de la pièce usinée.

D'abord, au bloc B13, le microprocesseur est configuré pour calculer des efforts instantanés d'usinage comportant un effort tangentiel d'arête $F_t$, un effort radial d'arête $F_r$, et un effort axial d'arête $F_a$, en fonction des coefficients spécifiques de coupe (coefficient d'effort tangentiel d'arête $K_{te}$, un coefficient d'effort radial d'arête $K_{re}$, un coefficient d'effort axial d'arête $K_{ae}$) et une largeur de dent en prise $b_{\lambda s}$ (i.e. la longueur de contact entre la dent et la surface) et l'épaisseur de copeau h non déformé instantané. Ces efforts instantanés d'usinage sont définis par les expressions suivantes :

[Math. 19]

$$F_t = K_{tc} \times b_{\lambda s} \times h + K_{te} \times b_{\lambda s} \quad (19)$$

[Math. 20]

$$F_r = K_{rc} \times b_{\lambda s} \times h + K_{re} \times b_{\lambda s} \quad (20)$$

[Math. 21]

$$F_a = K_{ac} \times b_{\lambda s} \times h + K_{ae} \times b_{\lambda s} \quad (21)$$

On notera que les coefficients d'efforts d'arête Kte, Kre, et Kae sont pratiquement égaux à zéro car le rayon d'acuité d'arête $r_\beta$ tend vers 0 pour un outil de coupe neuf ou en bon état.

Ensuite, le microprocesseur est configuré pour déterminer au moins un paramètre opératoire de coupe. Un premier paramètre opératoire correspond à un couple $C$ à la broche défini en fonction de la vitesse de coupe $v_c$ et du diamètre de l'outil $D$, selon la relation suivante :

[Math. 22]

$$C = (D/2) \times F_t \qquad (22)$$

Un deuxième paramètre opératoire correspond à une puissance $P$ à la broche définie en fonction de l'effort tangentiel d'arête $F_t$ et de la vitesse de coupe $v_c$ selon la relation suivante :
[Math. 23]

$$P = V_c \times F_t \qquad (23)$$

D'autres types de paramètres opératoires peuvent être déterminés comme par exemple, l'intensité de courant électrique circulant dans la machine d'usinage ou la vibration au niveau de la broche.

Ensuite, le microprocesseur est configuré pour établir des seuils d'abattement de fatigue en fonction des paramètres opératoires correspondant rendant compte d'une anomalie d'usinage ou d'un bris d'outil.

Ainsi, en mode opératoire, le module d'acquisition 3 est configuré pour acquérir à des instants successifs de l'usinage, des valeurs d'un signal opératoire (puissance, couple, intensité électrique, etc.) issues de la machine d'usinage.

En outre, le microprocesseur 5 est configuré pour comparer la valeur du signal opératoire au seuil de fatigue correspondant afin de vérifier que le signal opératoire ne dépasse pas le seuil de fatigue garantissant ainsi l'intégrité de matière de la pièce usinée.

Dans la suite on décrit un exemple numérique décrivant les étapes d'apprentissage du schéma en bloc de la Fig. 2. On notera que l'algorithme de cet exemple est valable pour la formation d'un copeau pour tous les matériaux métalliques et selon tous les procédés d'usinage.

L'étape E1 concerne l'acquisition par le microprocesseur via le module d'acquisition 3 ou l'interface d'entrée 9 des données d'entrées correspondant à des paramètres cinématiques macroscopiques (voir bloc B2). A titre d'exemple, les données d'entrées sont les suivantes :

- R = 12.5 ; #Rayon d'outil [mm]#
- v = 60*1/60 ; #Vitesse de coupe [m/s]#
- fz=0.37 ; #Avance à la dent [mm/rev/Z]#
- ae=0.5 ; #Engagement radial [mm]#
- ap=6 ; #Engagement axial [mm]#
- 

$$\gamma_n = 10*(Pi/180);$$

#Angle γn de coupe [rad]#
- 

$$\lambda_s = 45*(Pi/180);$$

"Angle d'hélice [rad]#
- 

$$\beta_a = (19.1 + 0.29\,\gamma n *180/Pi)*Pi/180;$$

#Angle de frottement sur la face de coupe [rad]#

A l'étape E2 le microprocesseur calcule les valeurs des paramètres de coupe selon les formules suivantes :

- 

$$\theta_{st} = Arccos\,(1 - a_e/R)\;;$$

#Angle d'immersion d'entrée [rad]#

- 

$$\theta_c = Arctan\left[\sqrt{a_e\big(2(R - a_e)\big)}/(R - a_e)\right];$$

#Angle d'immersion critique [rad]#

- 
$$\theta_p = Arcsin \; (r_\beta/f_z) + \theta_{ex} \; ;$$

#Angle d'immersion de labourage [rad]#

- 
$$\theta_{ex} = Arcsin \; (- f_z \, /D) \; ;$$

#Angle d'immersion de sortie [rad]#

- 
$$h_{max} = R - \sqrt{f_z{}^2 + R^2 - 2f_z \sqrt{a_e\big(2(R - a_e)\big)}} \; ;$$

#Épaisseur maximale de copeau non déformé [mm]#

- 
$$b_{\lambda s(cut)} = R(\theta_{st} - \theta_p)/sin \; \lambda_s \; ;$$

#Longueur de contact dent matière en phénomène de coupe [mm]#

- 
$$b_{\lambda s(plou)} = R(\theta_p - \theta_{ex})/sin \; \lambda_s \; ;$$

#Longueur de contact dent matière en phénomène de labourage [mm]#

- 
$$h[\theta] := f_z \; sin \; [\theta - \theta_{ex}] \; , \; \theta_c \leq \theta \leq \theta_{ex} \; ;$$

#Epaisseur coupée en fonction de l'angle d'immersion [mm]#

Les résultats des paramètres de coupe sont :

- $\theta_{st}$ = 16.26°
- $\theta_c$ = 14.59°
- $\theta_{pl}$ = 0.66°
- $\theta_{ex}$ = - 0.86°
- $h_{max}$ = 0.1 mm
- $b_{\lambda s(cut)}$ = 4.81 mm
- $b_{\lambda s(plou)}$ = 0.47 mm

Ensuite, à l'étape E3, le microprocesseur met en oeuvre une itération numérique définie ci-dessous (voir aussi bloc B5) pour déterminer les paramètres de la coupe oblique :
*FindRoot* [

$$sin \; \theta_i == sin \; \beta_a \; sin \; \eta \; ,$$

$$tan \; (\theta_n + \gamma_n \,) == tan \; \beta_a \; cos \; \eta \; ,$$

$$sin \; \varphi i == \sqrt{2} sin \; \theta_i$$

$$cos\ (\varphi_n + \theta_n) == tan\ \theta_i\ tan\ \varphi_i$$

$$tan\ \eta = [1/\ sin\ \varphi_n\ ][tan\ \lambda_s\ cos\ (\varphi_n - \gamma_n\ ) - cos\ \gamma_n\ tan\ \varphi_i],$$

$$\{\ \vartheta_i,0.1\},\ \{\ \vartheta_n\ ,\ 0.1\},\ \{\ \phi_i\ ,\ 0.1\},\ \{\ \phi_n\ ,\ 0.1\},\ \{\ \eta\ ,\ \lambda_s\ \}$$

]

En appliquant les étapes itératives ci-dessus, le microprocesseur donne les résultats suivants des paramètres de la coupe oblique :

- $\eta$ = 43.30°
- $\theta_i$ = 14.89°
- $\theta_n$ = 3.38°
- $\varphi_i$ = 21.37°
- $\varphi_n$ = 40.6°

On note que les angles ne dépendent pas de l'épaisseur de copeau non déformé h.

A l'étape E4 le microprocesseur calcule la valeur de l'épaisseur de la bande de cisaillement $h_s$ en utilisant la formule ci-dessous :

$$h_s = h\ /\ 10\ sin\ \varphi_n$$

Le résultat de l'épaisseur de la bande de cisaillement $h_s$ est :

- $hs$ = 0.015 mm.

A l'étape E5 le microprocesseur calcule la valeur du facteur d'asymétrie k en utilisant la formule ci-dessous :

$$k = (sin\ \varphi\ sin\ (\varphi - \gamma_n)\ /\ cos\ \gamma_n$$

Le résultat de la valeur du facteur d'asymétrie k est :

- k = 33.7 %.

A l'étape E6 le microprocesseur détermine le champ de déformation en utilisant les expressions ci-dessous :

- q = 3 to 7
- 
$$d\gamma_m = (q + 1) \times V_c \times cos\ (\gamma_n)\ /\ h_s \times cos\ (\varphi_n - \gamma_n)\ ;$$

  #Vitesse de déformation maximale [s-1]#
- 
$$\gamma_1[y_s] := d\gamma_m \times (y_s + (1 - k) * h_s)\ (q+1)\ /\ (q + 1) * V_c * sin\ \varphi_n * ((1 - k) * h_s)^q\ ;$$

  #Déformation en zone d'entrée de la ZSP#
- 

  $y_2[y_s] := (cos\ y_n\ /\ (cos(\phi_n - y_n) \times sin\phi_n) - (dy_m \times (-y_s + k*h_s)(q+1)\ /\ (q+1)*V_c*sin\phi_n*k\ h_s)q);$ #Déformation en zone de sortie de la ZSP#

Le résultat du champ de déformation est :

- $\gamma[0]$ = 1.16 *mm/mm*
- $\gamma[k * h_s]$ = 1.76 *mm/mm*

A l'étape E7 le microprocesseur détermine le champ de vitesse de déformation en utilisant les expressions ci-dessous :

-

$$d\gamma_1[y_s] := d\gamma_m \times (y_s + (1 - k) * h_s)^q / ((1 - k) * h_s)^q$$

-

$$d\gamma_2[y_s] := d\gamma_m \times (- y_s + k * h_s)^q / ( k * hs^{\,q}$$

Le résultat du champ de vitesse de déformation est :

- $d\gamma_m$ = 298 145 s$^{-1}$
- $< d\gamma >$ = 74 536 s$^{-1}$

A l'étape E8 (voir aussi bloc B7) le microprocesseur détermine le champ de température en utilisant les équations (9) et (10), les valeurs données dans le tableau (1) ainsi que les valeurs suivantes :

$$t_r = 20 + 273.15;$$

$$t_m = 1660 + 273.15;$$

$$d = 1 - (T/t_m)\text{^}d;$$

$$p = (T/t_m)\text{^}b;$$

$$d\backslash[Gamma]0 = 0.01;$$

Le résultat du champ de température est :

- $T_{max}$ = 461, 5°*C*
- $T_{(AB)}$ = 360.9°C

A l'étape E9 (voir aussi bloc B8) le microprocesseur détermine le champ de contrainte de cisaillement en intégrant la solution du champ de température en utilisant les expressions ci-dessous :

$$\bullet \ \langle \tau_s \rangle = \frac{1}{h_s} \left( \int_{(k-1)h_s}^{0} \tau_1[y_s]\, dy_s + \int_{0}^{k \times h_s} \tau_2[y_s]\, dy_s \right)$$

Le résultat du champ de contrainte de cisaillement est :

- $\tau$ [*entrance band*] = 570 *MPa*
- $\tau$ [(*AB*)] = 490 *MPa*
- $\tau$ [(*exit band*)] = 410 *MPa*
- $< \tau_s >$ = 504.7 *MPa*

A l'étape E10 (voir aussi blocs B11 et B12), le microprocesseur détermine les contraintes mécaniques en utilisant les équations (16)-(21):
Le résultat des contraintes mécaniques est :

- $K_{tc}$ = 1334 *MPa*
- $K_{rc}$ = 166.5 *MPa*
- $K_{ac}$ = 770 *MPa*
- $F_t$ = 321 *N*
- $F_r$ = 40 *N*
- $F_a$ = 185.5 *N*

A l'étape E11 (voir aussi bloc B12), le microprocesseur détermine la puissance au niveau de la broche de la machine à usinage en utilisant l'équation (23). Le résultat de la puissance est :

$P$ = 321 W

A l'étape E12 (voir aussi bloc B10), le microprocesseur estime la charge thermique en utilisant les équations (14) et (15) et données suivantes :

- $T_0$ = 20 ; #Température initiale de la surface [°C]#
- $k_1$ = 6.67 ; #Diffusivité thermique du Ti-6Al-4V [m$^2$/s]#
- $T_s$ ; #Température dans la bande de cisaillement primaire [°C]#
- $R_1$; #Partition thermique depuis la PSZ vers le copeau [%]#

$$T_w = T_0 + (1 - R_1) \times T_s$$

Le résultat de la charge thermique est :

- $R_1$ = 69.4 %
- $T_w$ = 141 °C

La présente invention présente ainsi les avantages suivants :

- D'assurer à l'industriel, pour une intégrité de surface souhaitée, à géométrie d'outil et matériau donnés, un champ d'utilisation de conditions de coupes.
- Un faible temps de calcul : comparé aux méthodes de l'art antérieur dont le temps de calcul peut atteindre plusieurs semaines. Il est donc possible de réaliser des analyses de sensibilités rapidement et de souligner les paramètres influents pour la maîtrise du procédé.
- Des coûts faibles : comparé aux résultats empiriques, qui nécessitent des campagnes d'essais instrumentés en efforts (dynamomètre) et en températures (thermocouples, caméra thermique, etc), le modèle proposé peut être alimenté avec des essais tribologiques peu onéreux.
- Transposable à tous les matériaux : ce système décrit un modèle prenant en compte la loi de comportement du matériau usiné. Le modèle est donc transposable à tous type de matériaux métalliques.
- Transposable à d'autres types de procédés d'usinage : tous les procédés d'usinage de coupe élémentaire, de tournage, fraisage, perçage et rabotage (brochage) engendrent les mêmes phénomènes thermomécaniques de formation du copeau, mais dans des configurations différentes (coupe continue pour le tournage et perçage, coupe discontinue pour le fraisage et le rabotage), (milieu confiné pour le perçage). Il est donc possible d'estimer le cas de chargement pour chaque procédé d'usinage.

## Revendications

1. Système de contrôle (1) lors de l'usinage d'une pièce (19) par une machine à usinage (15), comportant :

    - un module d'acquisition (3) configuré pour acquérir des valeurs d'un ensemble de paramètres d'entrée relatifs à des conditions de coupes et des propriétés du matériau de ladite pièce (19) et pour acquérir lors de l'usinage de la pièce (19) au moins un signal de coupe,
    - une unité de stockage (7), et
    - un microprocesseur (5) configuré pour :
    - déterminer au moins un paramètre opératoire de coupe représentatif d'un signal de coupe issu de la machine d'usinage (15) en utilisant un ensemble de paramètres de sortie d'un modèle d'intégrité (21) construit préalablement lors d'une phase d'apprentissage et stocké dans l'unité de stockage (7), ledit modèle d'intégrité (21) reliant ledit ensemble de paramètres d'entrée audit ensemble de paramètres de sortie comprenant des coefficients spécifiques de coupe représentatifs de l'intégrité de matière de la pièce (19), ledit au moins un paramètre opératoire de coupe étant un paramètre de coupe C représentatif d'un signal de couple issu de la machine d'usinage (15) ou un paramètre de puissance représentatif d'un signal de puissance issu de la machine d'usinage, et

- établir au moins un seuil de fatigue dudit au moins un paramètre opératoire de coupe, ledit seuil de fatigue permettant le contrôle du déroulement des opérations de coupe,
- ledit au moins un seuil de fatigue est un seuil de couple ou un seuil de puissance, et **caractérisé en ce que** :
- le microprocesseur est configuré pour :

- calculer en utilisant des relations géométriques et empiriques les valeurs d'angles caractéristiques de la coupe oblique comportant un angle de cisaillement oblique $\phi_i$, un angle de cisaillement normal $\phi_n$, un angle de projection normal $\vartheta_n$, un angle de projection oblique $\vartheta_i$ et un angle d'écoulement de copeau $\eta$, en fonction des valeurs d'un angle de frottement moyen $\beta_a$, d'un angle de coupe $\gamma_n$, et d'un angle d'hélice $\lambda_s$, et

- - calculer en utilisant des relations analytiques et empiriques les valeurs des paramètres de la coupe orthogonale comportant les valeurs d'épaisseur de la bande de cisaillement $h_s$ et un facteur d'asymétrie $k_s$ en utilisant les valeurs de la vitesse de coupe $v_c$, l'angle de cisaillement normal $\phi_n$ et l'angle de coupe $\gamma_n$.

2. Système de contrôle (1) selon la revendication 1, **caractérisé en ce que** ledit microprocesseur (5) est configuré pour contrôler le déroulement des opérations de coupe en s'assurant que la valeur dudit signal de coupe soit bornée par ledit seuil de fatigue.

3. Système de contrôle (1) selon l'une quelconque des revendications précédentes, **caractérisé en ce que**

- le module d'acquisition (3) est configuré pour acquérir lors d'une phase préalable d'apprentissage des valeurs de paramètres d'entrée comprenant :

- des paramètres cinématiques macroscopiques comportant un paramètre de vitesse de coupe $v_c$, un paramètre d'avance à la dent $f_z$, un paramètre d'engagement axial de l'outil $a_p$, et un paramètre d'engagement radial de l'outil $a_e$;
- des paramètres de la géométrie de l'outil comportant un angle de coupe $\gamma_n$, et un angle d'hélice (obliquité d'arête) $\lambda_s$;
- des paramètres de tribologie comportant un angle de frottement moyen $\beta_a$ ; et
- des paramètres du matériau comportant une capacité thermique massique $c_{cp}$, une masse volumique $\rho$ et un coefficient de Taylor-Quinney $\chi$; et **en ce que**
- le microprocesseur (5) est configuré pour construire, lors de cette phase préalable d'apprentissage, le modèle d'intégrité en utilisant des relations physiques analytiques et/ou empiriques reliant ledit ensemble de paramètres d'entrée audit ensemble de paramètres de sortie représentatifs des contraintes de coupe.

4. Système de contrôle (1) selon la revendication 1, **caractérisé en ce que** le microprocesseur (5) est configuré pour

- déterminer les valeurs de déformation de cisaillement $\gamma_s$ et de taux de déformation $d\gamma_s/dt$ dans la bande de cisaillement primaire en fonction des valeurs d'épaisseur de la bande de cisaillement $h_s$ et du facteur d'asymétrie $k_s$ et
- utiliser une loi de comportement du matériau et lesdites valeurs de déformation de cisaillement $\gamma_s$ et de taux de déformation $d\gamma_s/dt$ ainsi que les valeurs de paramètres du matériau pour déterminer une contrainte de cisaillement $\tau_s$ dans la bande de cisaillement primaire.

5. Système de contrôle (1) selon la revendication 4, **caractérisé en ce que** le microprocesseur (5) est configuré pour calculer les coefficients spécifiques de coupe comportant un coefficient d'effort tangentiel d'arête $K_{tc}$, un coefficient d'effort radial d'arête $K_{rc}$, et un coefficient d'effort axial d'arête $K_{ac}$, en fonction de la contrainte de cisaillement $\tau_s$ et l'angle de cisaillement oblique $\phi_i$, l'angle de cisaillement normal $\phi_n$ l'angle de projection normal $\vartheta_n$, l'angle de projection oblique $\vartheta_i$ et l'angle d'hélice $\lambda_s$.

6. Système de contrôle (1) selon la revendication 5, **caractérisé en ce que** le microprocesseur (5) est configuré pour

- calculer des efforts instantanés d'usinage comportant un effort tangentiel d'arête $F_t$, un effort radial d'arête $F_r$,

et un effort axial d'arête $F_a$, en fonction des coefficients spécifiques de coupe (coefficient d'effort tangentiel d'arête $K_{te}$, un coefficient d'effort radial d'arête $K_{re}$, un coefficient d'effort axial d'arête $K_{ae}$), une largeur de dent en prise $b_{\lambda s}$ et l'épaisseur de copeau $h$,
- calculer le paramètre de couple $C$ à la broche et le paramètre de puissance $P$ à la broche en fonction de l'effort tangentiel d'arête $F_t$, la vitesse de coupe $v_c$ et le diamètre de l'outil $D$, et
- établir un seuil de couple et un seuil de puissance en fonction des paramètres de couple $C$ et de puissance $P$.

7. Machine d'usinage (15) à commande numérique commandée par un dispositif de commande (13) dans lequel est intégré un système de contrôle (1) selon l'une quelconque des revendications précédentes.

8. Procédé de contrôle lors de l'usinage d'une pièce (19) par une machine à usinage (15), comportant les étapes suivantes :

- acquérir des valeurs d'un ensemble de paramètres d'entrée relatifs à des conditions de coupes et des propriétés du matériau de ladite pièce (19), et
- déterminer au moins un paramètre opératoire de coupe représentatif d'un signal de coupe issu de la machine d'usinage (15) en utilisant un ensemble de paramètres de sortie d'un modèle d'intégrité (21) construit préalablement lors d'une phase d'apprentissage et stocké dans une unité de stockage, ledit modèle d'intégrité (21) reliant ledit ensemble de paramètres d'entrée audit ensemble de paramètres de sortie comprenant des coefficients spécifiques de coupe représentatifs de l'intégrité de matière de la pièce (19), ledit au moins un paramètre opératoire de coupe étant un paramètre de coupe $C$ représentatif d'un signal de coupe issu de la machine d'usinage (15) ou un paramètre de puissance représentatif d'un signal de puissance issu de la machine d'usinage, et
- établir au moins un seuil de fatigue dudit au moins un paramètre opératoire de coupe, ledit seuil de fatigue permettant le contrôle du déroulement des opérations de coupe,
- ledit au moins un seuil de fatigue est un seuil de couple ou un seuil de puissance, et **caractérisé en ce que** le procédé de contrôle comporte les étapes suivantes :

- calculer en utilisant des relations géométriques et empiriques les valeurs d'angles caractéristiques de la coupe oblique comportant un angle de cisaillement oblique $\phi_i$, un angle de cisaillement normal $\phi_n$, un angle de projection normal $\vartheta_n$, un angle de projection oblique $\vartheta_i$ et un angle d'écoulement de copeau $\eta$, en fonction des valeurs d'un angle de frottement moyen $\beta_a$, d'un angle de coupe $\gamma_n$, et d'un angle d'hélice $\lambda_s$, et
- calculer en utilisant des relations analytiques et empiriques les valeurs des paramètres de la coupe orthogonale comportant les valeurs d'épaisseur de la bande de cisaillement $h_s$ et un facteur d'asymétrie $k_s$ en utilisant les valeurs de la vitesse de coupe $v_c$, l'angle de cisaillement normal $\phi_n$ et l'angle de coupe $\gamma_n$.

**Patentansprüche**

1. System zur Kontrolle (1) während der Bearbeitung eines Werkstücks (19) durch eine Bearbeitungsmaschine (15), das Folgendes umfasst:

- ein Erfassungsmodul (3), das dazu konfiguriert ist, Werte eines Satzes von Eingangsparametern in Bezug auf Schneidbedingungen und Eigenschaften des Werkstoffs des Werkstücks (19) zu erfassen und während der Bearbeitung des Werkstücks (19) mindestens ein Schneidsignal zu erfassen,
- eine Speichereinheit (7) und
- einen Mikroprozessor (5), der zu Folgendem konfiguriert ist:

- Bestimmen mindestens eines Schneidbetriebsparameters, der für ein aus der Bearbeitungsmaschine (15) stammendes Schneidsignal repräsentativ ist, unter Verwendung eines Satzes von Ausgangsparametern eines Integritätsmodells (21), das vorab während einer Lernphase erstellt und in der Speichereinheit (7) gespeichert wurde, wobei das Integritätsmodell (21) den Satz von Eingangsparametern mit dem Satz von Ausgangsparametern, der spezifische Schneidkoeffizienten, die für die Werkstoffintegrität des Werkstücks (19) repräsentativ sind, beinhaltet, in Beziehung setzt, wobei der mindestens eine Schneidbetriebsparameter ein Schneidparameter C, der für ein aus der Bearbeitungsmaschine (15) stammendes Drehmomentsignal repräsentativ ist, oder ein Leistungsparameter, der für ein aus der Bearbeitungsmaschine stammendes Leistungssignal repräsentativ ist, ist, und
- Festlegen mindestens einer Ermüdungsschwelle des mindestens einen Schneidbetriebsparameters, wobei die Ermüdungsschwelle die Kontrolle des Ablaufs der Schneidvorgänge gestattet,
- wobei die mindestens eine Ermüdungsschwelle eine Drehmomentschwelle oder eine Leistungsschwelle ist, und **dadurch gekennzeichnet, dass**:

    - der Mikroprozessor zu Folgendem konfiguriert ist:
    - Berechnen, unter Verwendung geometrischer und empirischer Beziehungen, der Winkelwerte, die für den schrägen Schnitt charakteristisch sind und einen schrägen Scherwinkel $\Phi_i$, einen normalen Scherwinkel $\Phi_n$, einen normalen Projektionswinkel $\vartheta_n$, einen schrägen Projektionswinkel $\vartheta_i$ und einen Spanflusswinkel $\eta$ umfassen, in Abhängigkeit von den Werten eines mittleren Reibungswinkels $\beta_a$, eines Schneidwinkels $\gamma_n$ und eines Steigungswinkels $\lambda_s$ und
    - Berechnen, unter Verwendung analytischer und empirischer Beziehungen, der Werte der Parameter des orthogonalen Schnitts, die die Dickenwerte der Scherzone $h_s$ und einen Asymmetriefaktor $k_s$ beinhalten, unter Verwendung der Werte der Schnittgeschwindigkeit $v_c$, des normalen Scherwinkels $\Phi_n$ und des Schneidwinkels $\gamma_n$.

2. Kontrollsystem (1) nach Anspruch 1, **dadurch gekennzeichnet, dass** der Mikroprozessor (5) dazu konfiguriert ist, den Ablauf der Schneidvorgänge zu kontrollieren und dabei sicherzustellen, dass der Wert des Schneidsignals durch die Ermüdungsschwelle begrenzt wird.

3. Kontrollsystem (1) nach einem beliebigen der vorhergehenden Ansprüche, **dadurch gekennzeichnet, dass**

    - das Erfassungsmodul (3) dazu konfiguriert ist, während einer vorausgehenden Lernphase Werte von Eingangsparametern zu erfassen, die Folgendes beinhalten:

    - makroskopische kinematische Parameter, die einen Schnittgeschwindigkeitsparameter $v_c$, einen Zahnvorschubparameter $f_z$, einen Parameter des axialen Eingriffs der Werkzeugs $a_p$ und einen Parameter des radialen Eingriffs des Werkzeugs $a_e$ umfassen;
    - Parameter der Geometrie des Werkzeugs, die einen Schneidwinkel $\gamma_n$ und einen Steigungswinkel (Kantenschrägheit) $\lambda_s$ umfassen;
    - tribologische Parameter, die einen mittleren Reibungswinkel $\beta_a$ umfassen; und
    - Parameter des Werkstoffs, die eine spezifische Wärmekapazität $c_{cp}$, eine Dichte $\rho$ und einen Taylor-Quinney-Koeffizienten $\chi$ umfassen; und dass
    - der Mikroprozessor (5) dazu konfiguriert ist, während dieser vorausgehenden Lernphase unter Verwendung analytischer und/oder empirischer physikalischer Beziehungen das Integritätsmodell zu erstellen, das den Satz von Eingangsparametern mit dem Satz von Ausgangsparametern, die für die Schneidspannungen repräsentativ sind, in Beziehung setzt.

4. Kontrollsystem (1) nach Anspruch 1, **dadurch gekennzeichnet, dass** der Mikroprozessor (5) zu Folgendem konfiguriert ist:

    - Bestimmen der Werte einer Scherverformung $\gamma_s$ und eines Verformungsgrades $d\gamma_s/dt$ in der primären Scherzone in Abhängigkeit von den Dickenwerten der Scherzone $h_s$ und dem Asymmetriefaktor $k_s$ und
    - Verwenden eines Verhaltensgesetzes des Werkstoffs und der Werte der Scherverformung $\gamma_s$ und des Verformungsgrades $d\gamma_s/dt$ sowie der Werte von Parametern des Werkstoffs, um eine Scherspannung $\tau_s$ in der primären Scherzone zu bestimmen.

5. Kontrollsystem (1) nach Anspruch 4, **dadurch gekennzeichnet, dass** der Mikroprozessor (5) dazu konfiguriert ist, die spezifischen Schneidkoeffizienten, die einen Koeffizienten einer Kantentangentialkraft $K_{tc}$, einen Koeffizienten einer Kantenradialkraft $K_{rc}$ und einen Koeffizienten einer Kantenaxialkraft $K_{ac}$ umfassen, in Abhängigkeit von der Scherspannung $\tau_s$ und dem schrägen Scherwinkel $\Phi_i$, dem normalen Scherwinkel $\Phi_n$, dem normalen Projektionswinkel $\vartheta_n$, dem schrägen Projektionswinkel $\vartheta_i$ und dem Steigungswinkel $\lambda_s$ zu berechnen.

6. Kontrollsystem (1) nach Anspruch 5, **dadurch gekennzeichnet, dass** der Mikroprozessor (5) zu Folgendem konfiguriert ist:

    - Berechnen von Bearbeitungsmomentankräften, die eine Kantentangentialkraft $F_t$, eine Kantenradialkraft $F_r$ und eine Kantenaxialkraft $F_a$ umfassen, in Abhängigkeit von den spezifischen Schneidkoeffizienten (Koeffizient der Kantentangentialkraft $K_{te}$, ein Koeffizient der Kantenradialkraft $K_{re}$, ein Koeffizient der Kantenaxialkraft $K_{ae}$),

einer Zahneingriffsbreite $b_{\lambda s}$ und der Spandicke h,
- Berechnen des Drehmomentparameters C an der Spindel und des Leistungsparameters P an der Spindel in Abhängigkeit von der Kantentangentialkraft Ft, der Schnittgeschwindigkeit $v_c$ und dem Werkzeugdurchmesser D, und
- Festlegen einer Drehmomentschwelle und einer Leistungsschwelle in Abhängigkeit von den Parametern des Drehmoments C und der Leistung P.

7. Numerisch gesteuerte Bearbeitungsmaschine (15), die von einer Steuervorrichtung (13) gesteuert wird, in die ein Kontrollsystem (1) nach einem beliebigen der vorhergehenden Ansprüche integriert ist.

8. Verfahren zur Kontrolle während der Bearbeitung eines Werkstücks (19) durch eine Bearbeitungsmaschine (15), das die folgenden Schritte umfasst:

   - Erfassen von Werten eines Satzes von Eingangsparametern in Bezug auf Schneidbedingungen und Eigenschaften des Werkstoffs des Werkstücks (19) und
   - Bestimmen mindestens eines Schneidbetriebsparameters, der für ein aus der Bearbeitungsmaschine (15) stammendes Schneidsignal repräsentativ ist, unter Verwendung eines Satzes von Ausgangsparametern eines Integritätsmodells (21), das vorab während einer Lernphase erstellt und in einer Speichereinheit gespeichert wurde, wobei das Integritätsmodell (21) den Satz von Eingangsparametern mit dem Satz von Ausgangsparametern, der spezifische Schneidkoeffizienten, die für die Werkstoffintegrität des Werkstücks (19) repräsentativ sind, beinhaltet, in Beziehung setzt, wobei der mindestens eine Schneidbetriebsparameter ein Schneidparameter C, der für ein aus der Bearbeitungsmaschine (15) stammendes Schneidsignal repräsentativ ist, oder ein Leistungsparameter, der für ein aus der Bearbeitungsmaschine stammendes Leistungssignal repräsentativ ist, ist, und
   - Festlegen mindestens einer Ermüdungsschwelle des mindestens einen Schneidbetriebsparameters, wobei die Ermüdungsschwelle die Kontrolle des Ablaufs der Schneidvorgänge gestattet,
   - wobei die mindestens eine Ermüdungsschwelle eine Drehmomentschwelle oder eine Leistungsschwelle ist, und **dadurch gekennzeichnet, dass** das Kontrollverfahren die folgenden Schritte umfasst:

     - Berechnen, unter Verwendung geometrischer und empirischer Beziehungen, der Winkelwerte, die für den schrägen Schnitt charakteristisch sind und einen schrägen Scherwinkel $\Phi_i$, einen normalen Scherwinkel $\Phi_n$, einen normalen Projektionswinkel $\vartheta_n$, einen schrägen Projektionswinkel $\vartheta_i$ und einen Spanflusswinkel $\eta$ umfassen, in Abhängigkeit von den Werten eines mittleren Reibungswinkels $\beta_a$, eines Schneidwinkels $\gamma_n$ und eines Steigungswinkels $\lambda_s$ und
     - Berechnen, unter Verwendung analytischer und empirischer Beziehungen, der Werte der Parameter des orthogonalen Schnitts, die die Dickenwerte der Scherzone $h_s$ und einen Asymmetriefaktor $k_s$ beinhalten, unter Verwendung der Werte der Schnittgeschwindigkeit $v_c$, des normalen Scherwinkels $\Phi_n$ und des Schneidwinkels $\gamma_n$.

## Claims

1. Control system (1) applicable during machining of a workpiece (19) by a machine tool (15), comprising:

   - an acquisition module (3) configured to acquire values of a set of input parameters relating to cutting conditions and properties of the material of said workpiece (19) and to acquire, during machining of the workpiece (19), at least one cutting signal,
   - a storage unit (7), and
   - a microprocessor (5) configured to:

     - use a set of output parameters of an integrity model (21) constructed beforehand in a learning phase and stored in the storage unit (7) to determine at least one cutting operating parameter representative of a cutting signal delivered by the machine tool (15), said integrity model (21) linking said set of input parameters to said set of output parameters comprising specific cutting coefficients representative of the material integrity of the workpiece (19), said at least one cutting operating parameter being a cutting parameter C representative of a torque signal delivered by the machine tool (15) or a power parameter representative of a power signal delivered by the machine tool, and
     - establish at least one fatigue threshold for said at least one cutting operating parameter, said fatigue threshold allowing the progress of the cutting operations to be controlled,
- said at least one fatigue threshold being a torque threshold or a power threshold, and **characterized in that**:

  - the microprocessor is configured to:

    - compute, using geometric and empirical relationships, the values of characteristic angles of the oblique cut comprising an oblique shear angle $\Phi_i$, a normal shear angle $\Phi_n$, a normal projection angle $\vartheta_n$, an oblique projection angle $\vartheta_i$, and a chip flow angle $\eta$, depending on the values of an average friction angle $\beta_a$, of a rake angle $\gamma_n$, and of a helix angle $\lambda_s$, and
    - use the values of the cutting speed $v_c$, normal shear angle $\Phi_n$ and rake angle $\gamma_n$ to compute, using analytical and empirical relationships, the values of the parameters of the orthogonal cut comprising the values of the shear-band thickness $h_s$ and an asymmetry factor $k_s$.

2. Control system (1) according to Claim 1, **characterized in that** said microprocessor (5) is configured to control the progress of the cutting operations while ensuring that the value of said cutting signal is bounded by said fatigue threshold.

3. Control system (1) according to any one of the preceding claims, **characterized in that**

   - the acquisition module (3) is configured to acquire, in a prior learning phase, values of input parameters comprising:

     - macroscopic kinematic parameters comprising a cutting-speed parameter $v_c$, a tooth-advance parameter $f_z$, a tool axial engagement parameter $a_p$, and a tool radial engagement parameter $a_e$;
     - parameters of the geometry of the tool comprising a rake angle $\gamma_n$, and a helix angle (edge obliqueness) $\lambda_s$;
     - tribology parameters comprising an average friction angle $\beta_a$; and
     - parameters of the material comprising a specific heat capacity $c_{cp}$, a density $\rho$ and a Taylor-Quinney coefficient $\chi$; and **in that**
     - the microprocessor (5) is configured to construct, in this prior learning phase, the integrity model using analytical and/or empirical physical relationships linking said set of input parameters to said set of output parameters representative of cutting stresses.

4. Control system (1) according to Claim 1, **characterized in that** the microprocessor (5) is configured to

   - determine values of the shear strain $\gamma_s$ and strain rate $d\gamma_s/dt$ in the primary shear band depending on the values of the shear-band thickness $h_s$ and asymmetry factor $k_s$, and
   - use a behaviour law of the material and said values of shear strain $\gamma_s$ and strain rate $d\gamma_s/dt$ and the values of parameters of the material to determine a shear stress $\tau_s$ in the primary shear band.

5. Control system (1) according to Claim 4, **characterized in that** the microprocessor (5) is configured to compute specific cutting coefficients comprising a tangential-edge-force coefficient $K_{tc}$, a radial-edge-force coefficient $K_{rc}$, and an axial-edge-force coefficient $K_{ac}$, depending on the shear stress $\tau_s$ and the oblique shear angle $\Phi_i$, the normal shear angle $\Phi_n$, the normal projection angle $\vartheta_n$, the oblique projection angle $\vartheta_i$ and the helix angle $\lambda_s$.

6. Control system (1) according to Claim 5, **characterized in that** the microprocessor (5) is configured to

   - compute instantaneous machining forces comprising a tangential edge force $F_t$, a radial edge force $F_r$ and an axial edge force $F_a$, depending on the specific cutting coefficients (tangential-edge-force coefficient $K_{te}$, radial-edge-force coefficient $K_{re}$, axial-edge-force coefficient $K_{ae}$), an engaged-tooth width $b_{\lambda s}$ and the chip thickness $h$,
   - compute the spindle torque parameter $C$ and the spindle power parameter $P$ depending on the tangential edge force $F_t$, cutting speed $v_c$ and tool diameter $D$, and
   - establish a torque threshold and a power threshold depending on the torque parameter $C$ and power parameter $P$.

7. Numerically controlled machine tool (15) controlled by a control device (13) into which a control system (1) according to any one of the preceding claims is integrated.

8.  Control method applicable during machining of a workpiece (19) by a machine tool (15), comprising the following steps:

    - acquiring values of a set of input parameters relative to cutting conditions and properties of the material of said workpiece (19), and
    - use a set of output parameters of an integrity model (21) constructed beforehand in a learning phase and stored in a storage unit to determine at least one cutting operating parameter representative of a cutting signal delivered by the machine tool (15), said integrity model (21) linking said set of input parameters to said set of output parameters comprising specific cutting coefficients representative of the material integrity of the workpiece (19), said at least one cutting operating parameter being a cutting parameter C representative of a torque signal delivered by the machine tool (15) or a power parameter representative of a power signal delivered by the machine tool, and
    - establish at least one fatigue threshold for said at least one cutting operating parameter, said fatigue threshold allowing the progress of the cutting operations to be controlled,
    - said at least one fatigue threshold being a torque threshold or a power threshold, and **characterized in that** the control method comprises the following steps:

      - computing, using geometric and empirical relationships, the values of characteristic angles of the oblique cut comprising an oblique shear angle $\Phi_i$, a normal shear angle $\Phi_n$, a normal projection angle $\vartheta_n$, an oblique projection angle $\vartheta_i$ and a chip flow angle $\eta$, depending on the values of an average friction angle $\beta_a$, of a rake angle $\gamma_n$, and of a helix angle $\lambda_s$, and
      - using the values of the cutting speed $v_c$, normal shear angle $\Phi_n$ and rake angle $\gamma_n$ to compute, using analytical and empirical relationships, the values of the parameters of the orthogonal cut comprising the values of the shear-band thickness $h_s$ and an asymmetry factor $ks$.

[Fig. 1]

FIG.1

Nouvelle FIG.2

B1 B2 B3 B4 B5

$V_c$, $f_z$, $a_p$, $a_e$

$r_\beta$, $\lambda_s$, $\gamma_n$

$\beta_a$

$V_c$   h   $b_{\lambda s}$

$r_\beta$ (=0)   $\gamma_n$   $\lambda_s$

$\Phi_n$   $\theta_i$   $\theta_n$   $\Phi_i$   $\eta$

(1) $\sin\theta_i = \sin\beta_a \sin\eta$
(2) $\tan(\theta_n + \gamma_n) = \tan\beta_a \cos\eta$
(3) $\sin\Phi_i = \sqrt{2} \sin\theta_i$
(4) $\cos(\Phi_n + \theta_n) = \tan\theta_i / \tan\Phi_i$
(5) $\tan\eta = [\tan\lambda_s \cos(\Phi_n - \gamma_n) - \cos\gamma_n \tan\Phi_i] / \sin\Phi_n$

3 to 7   q   $h_s$   k

B6  PSZ Strain : $\gamma_s$
PSZ Strain rate : $d\gamma_s/dt$

B7  Constitutive Law

B8  PSZ Temperature distribution $T_s$

B11

B9  PSZ Stress distribution $\tau_s$

B10  PSZ average shear stress $\langle\tau_s\rangle$

$c_p$   $\chi$   $\rho$

B12   $K_{tc}$   $K_{rc}$   $K_{ac}$

B13   C   P

23

**RÉFÉRENCES CITÉES DANS LA DESCRIPTION**

**Documents brevets cités dans la description**

- WO 2015079164 A
- EP 1522384 A